# EUROPÄISCHE PATENTSCHRIFT

(11) **EP 2 740 610 B1**
(45) Veröffentlichungstag und Bekanntmachung des Hinweises auf die Patenterteilung: **15.02.2017**
(21) Anmeldenummer: 12195583.5
(22) Anmeldetag: 05.12.2012
(51) Int. Cl.: B44C 5/04

(54) **Verschleißschutzschicht mit ellipsoiden Feststoffpartikeln**
Anti-wear layer with ellipsoidal solid particles
Couche de protection contre l'usure avec des particules de matière solide ellipsoïdes

(43) Veröffentlichungstag der Anmeldung: 11.06.2014
(73) Patentinhaber: Surface Technologies GmbH & Co. KG, 15837 Baruth (DE)
(72) Erfinder: Hannig, Hans-Jürgen, 51427 Bergisch-Gladbach (DE)
(74) Vertreter: Michalski Hüttermann & Partner Patentanwälte mbB

(56) Entgegenhaltungen:
- EP-A1- 1 700 689
- EP-A2- 1 886 838
- EP-B1- 1 339 545
- US-A1- 2009 087 643

## Beschreibung

Die vorliegende Erfindung betrifft eine Verschleißschutzschicht für ein Wand-, Decken- oder Bodenpaneel. Solche Paneele werden nachfolgend allgemein als Dekorpaneel bezeichnet.

Unter dem Begriff Dekorpaneel sind somit im Sinne der Erfindung Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Zur Verbesserung der Beständigkeit der Dekorpaneele weisen diese vielfach eine Verschleißschutzschicht auf. Eine Verschleißschutzschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen wie beispielsweise Abrieb schützt.

Die Dekorpaneele weisen vielfach ein Dekor auf, welches einen Naturwerkstoff nachempfinden soll. Beispiele für nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele meist als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Nachdem gegebenenfalls noch auf der dem Dekorpapier gegenüber liegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

Alternativ kann zur Herstellung eines Dekorpaneels eine Trägerplatte direkt mit einem Dekor, beispielsweise mittels Digital-, Offset- oder Flexodruckverfahren bedruckt werden. Dabei ist im Sinne der Erfindung unter einem direkten Bedrucken des Paneels auch das Bedrucken einer zuvor auf den Träger aufgebrachten Grundierung zur verstehen. Eine solche Grundierung kann aus einer als flüssige oder pastöse Phase auf den Träger aufgebrachten und anschließend gehärteten Zusammensetzung oder einer noch nicht mit einem Dekor bedruckten Vlies- oder Papierschicht bestehen. Auf ein so bedrucktes Paneel kann ebenfalls ein Overlay aufgebracht werden und der so gebildete Schichtenaufbau durch Wärme- und/oder Druckeinwirkung miteinander verbunden werden.

Der plattenförmige Träger des Dekorpaneels ist bevorzugt aus einem Material ausgebildet, welches ausgewählt ist aus der Gruppe bestehend aus Holz, Holzwerkstoff, Faserwerkstoff, Kunststoff, Glas, Stein, Keramik, Mineralwerkstoff oder Mischungen dieser.

Holzwerkstoffe im Sinne der Erfindung sind dabei neben Vollholzwerkstoffen auch Materialien wie z.B. Brettsperrholz, Brettschichtholz, Stabsperrholz, Furniersperrholz, Furnierschichtholz, Furnierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Im Sinne der Erfindung sind unter dem Begriff Faserwerkstoffe Materialien wie z.B. Papier und Vliese auf Basis pflanzlicher, tierischer, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern Platten aus Biomasse wie Stroh, Maisstroh, Bambus, Laub, Algenextrakte, Hanf, Baumwolle oder Ölpalmenfasern. Beispiele für tierische Faserwerkstoffe sind Keratin basierte Materialien wie z.B. Wolle oder Rosshaar. Beispiele für mineralische Faserwerkstoffe sind aus Mineralwolle oder Glaswolle.

Kunststoffe, welche als Trägermaterial dienen können sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), AcrylnitrilButadien-Styrol (ABS), Polymethylmethacrylat (PMMA), Polycarbonat (PC), Polyethylenterephthalat (PET), Polyetheretherketon (PEEK) oder Mischungen oder CoPolymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein. Insbesondere kann es vorgesehen sein, dass das Trägermaterial ein Flammschutzmittel aufweist.

Im Sinne der Erfindung sind unter dem Begriff Stein- und Keramik-Materialien wie beispielsweise Granit, Marmor, Sandstein, Schiefer, Fliesen, Feinsteinzeugplatten oder dergleichen zu verstehen. Mineralwerkstoffe im Sinne der Erfindung sind beispielsweise Gipskartonplatten, Zement- oder Betonplatten oder auch Mischwerkstoffplatten aus Kunstharz und mineralischen Zusätzen.

Zur Verbesserung der Verschleißbeständigkeit kann die Verschleißschutzschicht verschleißhemmende Partikel, wie beispielsweise Hartstoffpartikel aufweisen. Ein Beispiel für solche verschleißhemdenden Partikel sind Korund-Partikel.

Die europäische Patentanmeldung EP 0 519 242 A1 beschreibt eine Verschleißschutzschicht für ein Dekorpaneel, welche Silan ummantelte Hartstoffpartikel sowie ein Verdichtungsmittel und ein Gleitmittel enthält.

US-A-3 928 706 offenbart ein Verfahren zur Herstellung von verschleißfesten Schichten, die aus einem Kernpapier, einem Dekorpapier, einer Verschleißschicht und einem Overlaypapier bestehen. Die Verschleißschicht, die aus einem hitzehärtbarem Kunstharz, einem darin fein verteiltem, wasserunlöslichem Hartstoff mit einer Härte nach Mohs von mindestens 7 und ebenfalls darin fein verteilten Cellulose-Fasern besteht, wird entweder auf eine Oberfläche des Dekor- oder des Overlay-Papiers aufgebracht. Alle drei Papiere sind mit einem hitzehärtbaren Kunstharz imprägniert und werden auf übliche Weise zu einem einheitlichen Laminat verarbeitet, indem sie bei Temperaturen von ca. 150°C zwischen hochpolierten Pressplatten verpresst werden.

In der DE-A-196 04 907 wird ein Verfahren zur Gewinnung eines abriebfesten Blattes beschrieben, bei welchem das Papier direkt bei der Herstellung, noch vor der Trocknung, mit einem Brei, der relativ grobe, abriebfeste Partikel sowie einen Binder enthält, beschichtet wird. Als Hartstoffpartikel werden z.B. Siliciumoxid, Aluminiumoxid, Alundum, Korund, Schmirgel, Spinell sowie diverse Carbide genannt.

Die WO 97/00172 beschreibt ein Verfahren, bei dem ein Overlay-Papier für die Herstellung von abriebfesten Laminaten beidseitig mit Hartstoffpartikeln beschichtet wird.

Ein Nachteil der aus dem Stand der Technik bekannten Verschleißschutzschichten ist jedoch, dass die Presswerkzeuge bei der Verpressung des Schichtverbundes durch die in der Verschleißschutzschicht enthaltenen Hartstoffpartikel stark verkratzen bzw. verschleißen. Dies tritt sowohl bei den im diskontinuierlichen Betrieb eingesetzten hochpolierten Spiegeloberflächen der Pressplatten als auch bei den im kontinuierlichen Betrieb eingesetzten Oberflächen der Pressbänder auf, wodurch die Presswerkzeuge schnell unbrauchbar werden und ersetzt werden müssen. Dies führt zu einem deutlichen Kostenaufwand.

EP 1 339 545 B1 offenbart eine Verschleißschutzschicht auf Basis eine Kunstharzes, welche neben Hartstoffpartikeln kugelförmige Feststoffpartikel, wie beispielsweise Glaskugeln, enthält. Die Hartstoffpartikel können aus Korund bestehen, mit einer Härte nach Mohs von 9. Der Durchmesser der Glaskugel ist im Mittel größer als der mittleren Korndurchmesser der Hartstoffpartikel.

Ein Nachteil beim Einsatz solcher Glaskugeln ist es, dass es zu einer optischen Beeinträchtigung des Dekorbildes kommen kann. Insbesondere können die durch die eingesetzten Glaskugeln hervorgerufenen optischen Beeinträchtigungen zu Problemen bei der Ausrichtung der in die Oberfläche einzubringenden Strukturierung zum dem Dekorbild auftreten.

In der DE-C-195 08 797 versucht man das Verschleißproblem bei der Fertigung dadurch zu lösen, dass man das Dekorpapier mit einer abriebfesten Schicht versieht, ohne dabei ein entsprechend vorgefertigtes Overlaypapier durch Verpressen aufzubringen, indem man die Viskosität des Kunstharzes für die Beschichtung des Dekorpapiers so einstellt, dass das fertige Dekorpapier eine glatte, abriebfeste Schicht aufweist, aus der kein Hartstoffpartikel mehr herausragt. Eine hohe Viskosität jedoch führt zu Lufteinschlüssen und damit zu mangelnder Transparenz der Schicht. Das Problem des Verschleißes der Presswerkzeuge ist damit auch nicht gelöst, da es bei der Endfertigung unter den üblichen Pressbedingungen immer noch zum Kontakt zwischen der Spiegeloberfläche des Presswerkzeugs und dem Hartstoff kommt.

Die US-A-5 344 704 beschreibt eine Möglichkeit zur Reduzierung des Verschleißes von Presswerkzeugen dadurch, dass vorgehärtete Harzpartikel zusammen mit den Hartstoffpartikeln eingearbeitet werden. Wenn diese vorgehärteten Harzpartikel jedoch die Presswerkzeuge schützen sollen, müssen sie größer sein als die Hartstoffpartikel. Da die Harzpartikel jedoch keine ausreichende Härte besitzen, wird dadurch die Abriebfestigkeit der Verschleißschicht stark herabgesetzt. Wenn die vorgehärteten Harzpartikel dagegen gleich groß oder kleiner als die Hartstoffpartikel sind, können die Presswerkzeuge nicht mehr oder nur ungenügend geschützt werden. Ein weiterer Nachteil besteht darin, dass die üblicherweise verwendeten Melaminharze nur bei einer vollständigen Aushärtung unter Druck die für eine qualitativ hochwertige Dekorschicht erforderliche hohe Transparenz erreichen. Somit scheint sowohl die mechanische Festigkeit als auch die dekorative Wirkung problematisch zu sein.

Die EP 1 886 838 A2 beschreibt ein Verfahren zum Herstellen eines dekorativen Laminats mit einem abriebfesten Overlay. Das Overlay wird dabei ausgebildet, indem eine erste Seite eines Substrats mit einem ersten härtbaren Harz imprägniert wird und die erste Seite des Substrats mit einer Lage einer Suspension mit einem zweiten härtbaren Harz und einer Mischung von abriebfesten Partikeln beschichtet wird. Die Mischung abriebfester Partikel umfasst wenigstens 5% elliptischer plättchenförmiger Partikel.

Dies berücksichtigend ist es die Aufgabe der vorliegenden Erfindung eine Verschleißschutzschicht anzugeben, welche die aus dem Stand der Technik bekannten Nachteile zu überwinden vermag. Darüber hinaus ist es die Aufgabe der vorliegenden Erfindung ein Verfahren zur Herstellung eines solchen Dekorpaneels mit einer solchen Verschleißschutzschicht anzugeben.

Gelöst wird die Aufgabe durch eine Verschleißschicht gemäß Anspruch 1 sowie ein Verfahren zur Herstellung eines Wand-, Decken- oder Bodenpaneel gemäß Anspruch 10.

Es wird somit eine Verschleißschutzschicht vorgeschlagen, welche ellipsoide Feststoffpartikel aufweist, wobei die ellipsoiden Feststoffpartikel die Form eines Rotationsellipsoiden oder eines Triaxialellipsoiden aufweisen.

Unter einem Rotationsellipsoid ist dabei im Sinne der Erfindung ein Ellipsoid zu verstehen, der zwei Nebenachsen identischer Länge aufweist, wohingegen ein Triaxialellipsoid ein Ellipsoid ist, dessen Nebenachsen unterschiedliche Längen aufweisen.

Dabei sind unter Feststoffpartikel Partikel zu verstehen, welche eine Härte nach Mohs von wenigstens ≥ 5, vorzugsweise ≥ 6 aufweisen. Vorzugsweise handelt es sich dabei um transparente oder zumindest transluzente Partikel, wie beispielsweise ellipsoide Glas- oder Quarzpartikel.

Es hat sich überraschender Weise gezeigt, dass durch den Einsatz ellipsoider Feststoffpartikel zum einen ein übermäßiger Verschleiß der Presswerkzeuge vermieden werden kann, zum anderen zeigen die ellipsoiden Feststoffpartikel, zumindest beim Einsatz transparenter oder transluzenter Partikel, ein vorteilhaftes optisches verhalten, so dass keine ungewünschten Verzerrungen auftreten. Vielmehr hat sich gezeigt, dass bedingt durch die ellipsoide Gestalt die Feststoffpartikel die Wirkung einer Linse haben, wodurch sich attraktive Erscheinungen der Oberfläche erreichen lassen.

Wie zuvor beschrieben wird der Schichtaufbau des Laminats durch Wärme- und/oder Druckeinwirkung miteinander verbunden. Es wird davon ausgegangen, dass sich die erfindungsgemäß in der Verschleißschutzschicht vorgesehenen ellipsoiden Feststoffpartikel unter der Einwirkung des Pressdrucks derart ausrichten, dass ihre Hauptachse im Wesentlichen parallel zur Ebene des Trägers ausgerichtet ist.

Überraschender Weise hat sich gezeigt, dass sowohl Rotationsellipsoide, als auch Triaxialellipsoide eine vorteilhafte Ausrichtung einnehmen, wenn der Schichtenverbund eines Laminats unter Wärme- und/oder Druckeinwirkung ausgehärtet wird. Während die Ellipsoiden Feststoffpartikel in der nicht ausgehärteten Verschleißschutzschicht statistisch ausgerichtet sind, also die Hauptachse des Ellipsoiden statistisch sowohl parallel zu der Schichtebene des Laminates als auch orthogonal oder zumindest antiparallel zu dieser Ebene ausgerichtet sind, richten sie sich unter Druck- und/oder Wärmeeinwirkung im Wesentlichen parallel zur Schichtebene des Laminates aus. Diese Ausrichtungsbewegung zeigt eine Dämpfungswirkung beim Verpressen des Schichtenpaketes aus dem das Laminat aufgebaut ist, was zu einem geringeren Verschleiß der Presswerkzeuge führen kann.

Gemäß einer Ausgestaltung der Erfindung kann es vorgesehen sein, dass anstatt einer Overlay-Schicht oder ergänzend zu einer Overlay-Schicht eine Lackschicht auf das Paneel aufgetragen wird. Dabei kann es vorgesehen sein, dass eine solche Lackschicht aus einem physikalisch durch z.B. Wärmeeinwirkung abbindenden Lack, z.B. auf Wasserbasis oder Basis organischer Lösungsmittel, oder durch einen mittels Bestrahlung mit elektromagnetischer Strahlung geeigneter Wellenlänge aushärtbaren Lack, wie beispielsweise einem UV-Lack, gebildet wird. In einer solchen Ausgestaltung sind die ellipsoiden Feststoffpartikel Bestandteil der Lackschicht und tragen zur Verbesserung der Abriebbeständigkeit dieser Schicht bei.

Das unter der Verschleißschutzschicht liegende Dekor ist gemäß einer bevorzugten Ausgestaltung der Erfindung mittels Druck, vorzugsweise Direktdruck, auf die Trägerplatte aufgebracht. Dabei ist im Sinne der Erfindung unter Direktdruck auch das aufbringen des Dekores mittels Drucktechniken auf eine zuvor auf den Träger aufgebrachte bedruckbare Schicht zu verstehen. Eine solche bedruckbare Schicht kann beispielsweise durch eine flüssig aufgetragene und anschließend ausgehärtete Primerschicht oder auch eine zuvor aufgebrachte bedruckbare Folien-, Papier- oder Vliesschicht ausgebildet sein. Die Primerschicht kann dabei z.B. aus einer härtbaren und bedruckbaren Polymerzusammensetzung, wie beispielsweise Polyacrylat, Polypropylen, Polyethylen, Polyurethanacylat oder dergleichen gebildet sein, welche als geeignete Pre-Polymerzusammensetzung auf die Trägerplatte aufgetragen und auf dieser zu einer entsprechenden Schicht durch geeignete Mittel wie z.B. elektromagnetische Strahlung oder Wärme ausgehärtet wird. Eine geeignete bedruckbare Folienschicht kann beispielsweise aus einem Kunststoffmaterial wie Polyacrylat, Polypropylen, Polyethylen, Polyurethanacrylat oder dergleichen bestehen, welche auf den profilierten Träger aufbringbar ist. Geeignete Papiere sind z.B. solche, wie sie auch als Ausgangsmaterial für vorbedruckte Dekorpapiere eingesetzt werden. Geeignete Vliesschichten sind z.B. solche auf Basis pflanzlicher, tierische, mineralischer oder auch künstlicher Fasern.

Gemäß einer Ausgestaltung der Erfindung besteht die Verschleißschutzschicht aus einer Polymermatrix, in welcher zumindest die ellipsoiden Feststoffpartikel eingelagert sind. Dabei kann die Polymermatrix aus einer wärme- und/oder strahlungshärtbaren Monomer- und/oder Oligomerzusammensetzung durch Wärmeeinwirkung und/oder Strahlungseinwirkung elektromagnetischer Strahlung geeigneter Wellenlänge gebildet sein. Beispiele für entsprechende härtbare Polymer-Vorstufen sind z.B. Phenolharz, Epoxidharz, Polyesterharz, Polycarbonat, Diallylphthalatharz, Polyurethanharz, Melaminharz, Harnstoffharze wie z.B. Formaldehydharz, oder Mischharze wie z.B. Phenol-Formaldehydharz oder Melamin-Formaldehydharz gebildet werden. Ebenso kann es vorgesehen sein, dass die Polymermatrix aus einem strahlungshärtbaren Lack, wie beispielsweise einem UV-härtbaren Acryllack gebildet wird. Strahlungshärtbar bedeutet dabei im Sinne der Erfindung, dass die die spätere Polymermatrix ausbildende Zusammensetzung durch Einwirkung elektromagnetischer Strahlung geeigneter Wellenlänge, wie z.B. UV-Strahlung oder IR-Strahlung, oder auch Ionenstrahlung radikalisch Polymerisiert wird und dabei die gewünschte Polymermatrix ausbildet.

Erfindungsgemäß weist die Verschleißschutzschicht neben den ellipsoiden Feststoffpartikeln Hartstoffpartikel auf, wobei die Hartstoffpartikel eine Härte nach Mohs wenigstens ≥ 8, vorzugsweise wenigstens ≥ 9 aufweisen. Beispielse für geeignete Hartstoffe sind Titannitrid, Titancarbid, Siliciumnitrid, Siliciumcarbid, Borcarbid, Wolframcarbid, Tantalcarbid, Aluminiumoxid (Korund), Zirconiumoxid, Zirconiumnitrid oder Mischungen dieser. Hierdurch wird die Verschleißfestigkeit der Schicht weiter erhöht.

Erfindungsgemäß ist das Verhältnis der Länge der Hauptachse der ellipsoiden Feststoffpartikel zu wenigstens einer seiner Nebenachsen im Mittel wenigstens ≥ 1,2, vorzugsweise ≥ 1,3, besonders bevorzugt ≥ 1,5, insbesondere ≥ 2.

Bei einem derart gewählten Verhältnis der Achsenlängen zueinander stellt sich in vorteilhafter Weise eine gute Dämpfungswirkung beim Verpressen des Schichtenpaketes ein.

Erfindungsgemäß ist es vorgesehen, dass die Länge der Hauptachse der ellipsoiden Feststoffpartikel im Mittel größer als der mittleren Korndurchmesser der Hartstoffpartikel ist. Vorzugsweise liegt das Verhältnis des Mittels der Länge der Hauptachse der ellipsoiden Feststoffpartikel zum mittleren Korndurchmesser der Hartstoffpartikel dabei in einem Bereich zwischen ≥ 1,0 und ≤ 4,0, bevorzugt zwischen ≥ 1,05 und ≤ 3,0, noch bevorzugter zwischen ≥ 1,1 und ≤ 2,5, besonders bevorzugt zwischen ≥ 1,2 und ≤ 2,0, wie beispielsweise zwischen ≥ 1,5 und ≤ 1,8.

Dabei ist es gemäß einer bevorzugten Ausgestaltung der Erfindung vorgesehen, dass die Länge der Hauptachse der ellipsoiden Feststoffpartikel im Mittel in einem Bereich zwischen ≥10µm und ≤ 375µm, vorzugsweise zwischen ≥10µm und ≤ 150µm liegt.

In einer weiteren Ausgestaltung der Erfindung ist es vorgesehen, dass das Verhältnis des Anteils von Feststoffpartikeln zu Hartstoffpartikeln in der Verschleißschutzschicht zwischen ≤ 10:1 und ≥ 0,1:10, vorzugsweise zwischen ≤ 5:1 und ≥ 0,5:10, besonders bevorzugt zwischen ≤ 1:1 und ≥ 1:10 liegt.

Der Anteil an Feststoffpartikeln und Hartstoffpartikel kann zusammen in der Verschleißschutzschicht gemäß einer weiteren Ausgestaltung der Erfindung in einem Bereich zwischen ≥ 5 Gew.-% und ≤ 40 Gew.-%, vorzugsweise ≥ 15 Gew.-% und ≤ 25 Gew.-% liegen. Es hat sich dabei gezeigt, dass ein solcher Anteil einerseits einen sehr guten Verschleißschutz des Laminates bieten, zum anderen auch eine hohe Transparenz der Verschleißschutzschicht sicherstellen kann, so dass das Laminat den heutigen optischen Ansprüchen gerecht werden kann.

Desweiteren wird mit der vorliegenden Erfindung ein Verfahren zur Herstellung eines Wand-, Decken- oder Bodenpaneel angegeben, aufweisend die Verfahrensschritte:
- Bereitstellen eines plattenförmigen Trägers;
- Aufbringen einer Dekorschicht auf den Träger;
- Aufbringen einer Verschleißschutzschicht auf die Dekorschicht,
wobei zur Aufbringung der Verschleißschutzschicht eine ellipsoide Feststoffpartikel aufweisende, wärme- und/oder strahlungshärtbare Monomer- und/oder Oligomerzusammensetzung aufgebracht wird, welche durch Wärmeeinwirkung und/oder Strahlungseinwirkung elektromagnetischer Strahlung geeigneter Wellenlänge zumindest teilweise ausgehärtet wird, wobei die ellipsoiden Feststoffpartikel die Form eines Rotationsellipsoiden oder eines Triaxialellipsoiden aufweisen und die Hartstoffpartikel eine Härte nach Mohs von wenigstens ≥ 8, vorzugsweise wenigstens ≥ 9, aufweisen, wobei die Länge der Hauptachse der ellipsoiden Feststoffpartikel im Mittel größer als der mittleren Korndurchmesser der Hartstoffpartikel ist, und wobei das Verhältnis der Länge der Hauptachse der ellipsoiden Feststoffpartikel zu wenigstens einer seiner Nebenachsen im Mittel wenigstens > 1,2, vorzugsweise > 1,3, besonders bevorzugt ≥ 1,5, insbesondere ≥ 2 ist.

Desweiteren kann es erfindungsgemäß vorgesehen sein, dass im Zuge der zumindest teilweisen Aushärtung der Verschleißschutzschicht eine im Wesentlichen mit dem Dekor übereinstimmende Struktur in die Verschleißschutzschichtoberfläche eingebracht wird.

In einer weiteren Ausgestaltung der Erfindung kann der plattenförmige Träger zumindest in einem Randbereich eine Profilierung aufweisen. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder Ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Die Verschleißschutzschicht kann beispielsweise als flüssige Zusammensetzung auf den mit dem Dekor bedruckten Träger aufgebracht und auf diesem ausgehärtet werden. Dabei kann es vorgesehen sein, dass der Feststoff/Hartstoff in einer Menge zwischen 5 Gew.-% und 40 Gew.-%, vorzugsweise zwischen 15 Gew.-% und 25 Gew.-% in der Verschleißschutzschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Verschleißschichtzusammensetzung eine stabile Dispersion ausbildet und eine Entmischung bzw. ein Absetzten des Feststoff/Hartstoffes in der Verschleißschutzschichtzusammensetzung vermieden werden kann. Zur Ausbildung einer entsprechenden Verschleißschutzschicht ist es in einer Ausgestaltung der Erfindung vorgesehen, dass die Feststoff/Hartstoff enthaltende und wärme- oder strahlungshärtbare Zusammensetzung in einer Konzentration zwischen 10 g/m² und 250 g/m², vorzugsweise zwischen 25 g/m² und 100g/m² aufgetragen wird. Dabei kann die Auftragung beispielsweise mittels Walzen, wie Gummiwalzen oder mittels Gießvorrichtungen aufgetragen werden. In einer weiteren Ausgestaltung der Erfindung kann es vorgesehen sein, dass der Feststoff/Hartstoff zum Zeitpunkt des Auftrages der Verschleißschutzschichtzusammensetzung nicht in der Zusammensetzung enthalten ist, sondern als Partikel auf die aufgetragenen Verschleißschutzschichtzusammensetzung aufgestreut wird und diese im Anschluss gehärtet wird. Ebenso kann es vorgesehen sein, dass die Verschleißschutzschicht als vorproduzierte Overlay-Schicht auf den bedruckten Träger aufgelegt und mit diesem durch Druck- und/oder Wärmeeinwirkung verbunden wird.

Wie bereits erwähnt kann es gemäß einer weiteren Ausgestaltung der Erfindung vorgesehen sein, dass die Verschleißschutzschicht eine mit dem Dekor der Dekorschicht im Wesentlichen übereinstimmende Oberflächenstrukturierung aufweist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit der mittels z.B. optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte durch eine Verschiebung der Trägerplatte oder durch eine Verschiebung des Druckwerkzeugs erfolgt. Gemäß einer weiteren Ausgestaltung der Erfindung ist es vorgesehen, dass eine Strukturierung der Dekorpaneele nach dem Auftrag der Verschleißschutzschicht erfolgt. Hierzu kann es bevorzugt vorgesehen sein, dass als Verschleißschutzschicht eine härtbare Zusammensetzung aufgetragen wird und ein Aushärtungsprozess nur in dem Maße erfolgt, dass lediglich eine Teilhärtung der Verschleißschutzschicht erfolgt. In die so teilgehärtete Schicht wird mittels geeigneter Werkzeuge, wie beispielsweise einer Hartmetall-Strukturwalz oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Schicht erfolgt eine weitere Härtung der nun strukturierten Verschleißschutzschicht.
Fig. 1 zeigt einen schematischen Querschnitt einer Ausführungsform einer erfindungsgemäßen Verschleißschutzschicht in einem mehrschichtigen Laminat;
Fig. 2A zeigt beispielhaft die Geometrie von erfindungsgemäß in einer Verschleißschutzschicht vorzusehenden Feststoffpartikeln;
Fig. 2B und 2C zeigen beispielhaft die perspektivische Darstellung eines die Form eines Triaxialellipsoiden (2B) sowie eines Rotationsellipsoiden (2C) aufweisenden Feststoffpartikels.

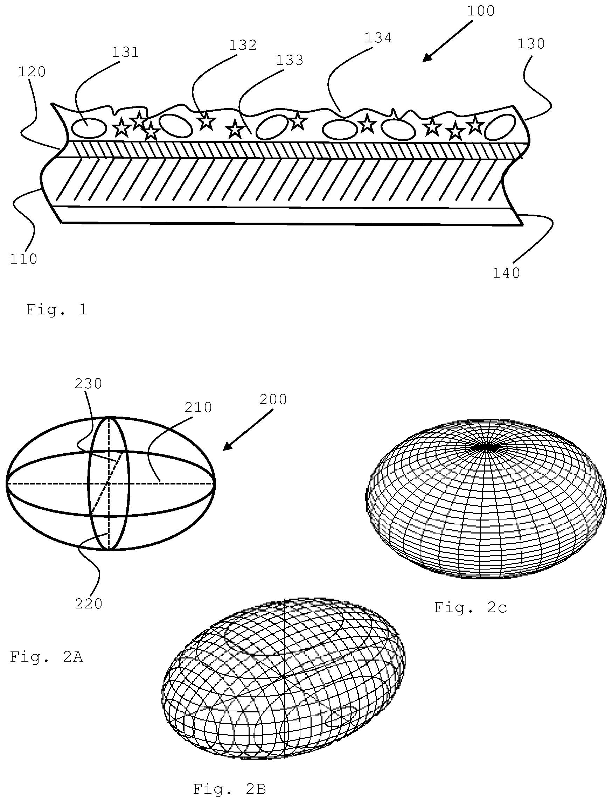

Fig. 1 zeigt einen schematischen Querschnitt einer Ausführungsform einer erfindungsgemäßen Verschleißschutzschicht 130 in einem mehrschichtigen Laminat 100. Das Laminat 100 besteht in der gezeigten Ausgestaltung aus einem plattenförmigen Träger 110 auf welchen eine Dekorschicht 120 aufgebracht ist. Auf die Dekorschicht 120 ist eine erfindungsgemäße Verschleißschutzschicht 130 aufgebracht. Auf der der Verschleißschutzschicht 130 gegenüberliegenden Seite des plattenförmigen Trägers 110 ist eine Gegenzugschicht 140 aufgebracht. Der plattenförmige Träger 110 kann aus einem Material ausgebildet sein, welches ausgewählt ist aus der Gruppe bestehend aus Holz, Holzwerkstoff, Faserwerkstoff, Kunststoff, Glas, Stein, Keramik, Mineralwerkstoff oder Mischungen dieser. Die Dekorschicht 120 kann entweder als ein vorgedrucktes Dekorpapier auf den plattenförmigen Träger 110 aufgebracht werden, oder im Zuge eines Direktdruckes auf den plattenförmigen Träger 110 direkt aufgedruckt werden. Dabei ist im Sinne der Erfindung unter einem Direktdruck auch das bedrucken einer zuvor auf den plattenförmigen Träger 110 aufgebrechten Druckgrundierung, wie beispielsweise ein unbedrucktes Papier oder einer Grundierungsschicht, zu verstehen. Die Verschleißschutzschicht 130 weist in der gezeigten Ausgestaltung ellipsoide Feststoffpartikel 131 auf. Die ellipsoiden Feststoffpartikel 131 weisen dabei die Form eines Triaxialellipsoiden oder eines Rotationsellipsoiden auf . Die ellipsoiden Feststoffpartikel 131 weisen bevorzugt eine Härte nach Mohs von wenigstens ≥ 5. Bevorzugt ist die Härte der Feststoffpartikel 131 dabei < 8 auf der Härteskala nach Mohs. Beispielse für geeignete Materialien, aus denen die Feststoffpartikel 131 bestehen können sind Glas, Quarz oder auch polymere Kunststoffe, die eine entsprechende Mohs-Härte aufweisen. Neben den ellipsoiden Feststoffpartikeln 131 weißt die Verschleißschutzschicht 130 Hartstoffpartikel 132 auf. Die Hartstoffpartikel 132 weisen eine Härte nach Mohs von wenigstens ≥ 8 auf. Beispielse für geeignete Materialien, aus welchen die Hartstoffpartikel 132 bestehen können sind Titannitrid, Titancarbid, Siliciumnitrid, Siliciumcarbid, Borcarbid, Wolframcarbid, Tantalcarbid, Aluminiumoxid (Korund), Zirconiumoxid und Zirconiumnitrid oder Mischungen dieser. Dabei weisen die Hartstoffpartikel einen mittleren Korndurchmesser (mittlere Korngrößenverteilung) auf, die kleiner ist als das Mittel der Länge der Hauptachse der ellipsoiden Feststoffpartikel 131. Die Feststoffpartikel 131 und die Hartstoffpartikel 132 sind in der Verschleißschutzschicht 130 in einer Polymermatrix 133 eingebettet. Dabei kann die Polymermatrix 133 sowohl aus einem wärmehärtbaren Kunststoff, wie z.B. Melaminharz oder Melamin-Formaldehydharz, als auch aus einem strahlungshärtbaren Polymer, wie z.B. einem Acrylat, bestehen. An der dem plattenförmigen Träger 110 gegenüberliegenden Seite der Verschleißschutzschicht 130, also der Nutzoberfläche, kann die Verschleißschutzschicht eine Strukturierung 134 aufweisen, welche bevorzugt im Wesentlichen in Übereinstimmung mit dem Dekor der Dekorschicht 120 eingebracht ist. Das Verhältnis des Anteils von Feststoffpartikeln zu Hartstoffpartikeln in der Verschleißschutzschicht kann bevorzugt zwischen ≤ 10:1 und ≥ 0,1:10 liegen. Der Anteil an Feststoffpartikeln und Hartstoffpartikel zusammen in der Verschleißschutzschicht kann bevorzugt zwischen ≥ 5 Gew.-% und ≤ 40 Gew.-% liegen. In einer bevorzugten Ausgestaltung der Erfindung können zumindest die Dekorschicht 120 und die Gegenzugschicht 140 in einem gemeinsamen Kalandrierschritt auf den plattenförmigen Träger 110 aufgebrecht werden.

Fig. 2A zeigt beispielhaft die Geometrie eines erfindungsgemäß in einer Verschleißschutzschicht vorzusehenden Feststoffpartikels 200. Das ellipsoide Feststoffpartikel 200 weist eine Hauptachse 210, sowie Nebenachsen 220 und 230 auf. Im Fall eines Triaxialellipsoiden sind die Längen aller drei Achsen, Also der Hauptachse 210, sowie der Nebenachsen 220 und 230, unterschiedlich. Im Fall eines Rotationsellipsoiden sind die Längen der Hauptachse 210 und der Nebenachse 230 identisch, während die Nebenachse 220 kürzer ist. In den erfindungsgemäß in einer Verschleißschutzschicht vorzusehenden ellipsoiden Feststoffpartikeln ist das Verhältnis der Länge der Hauptachse 210 zu wenigstens einer seiner Nebenachsen 220 oder 230 im Mittel wenigstens ≥ 1,2. Die Länge der Hauptachse 210 liegt im Mittel bevorzugt in einem Bereich zwischen ≥10µm und ≤ 375µm. Die Fig. 2B und 2C zeigen modellhaft eine perspektivische Ansicht eines triaxialellipsoidalen bzw. eines rotationsellipsoidalen Feststoffpartikels.

## Patentansprüche

1. Verschleißschutzschicht für ein Wand-, Decken- oder Bodenpaneel, wobei die Verschleißschutzschicht ellipsoide Feststoffpartikel aufweist, wobei die ellipsoiden Feststoffpartikel die Form eines Rotationsellipsoiden oder eines Triaxialellipsoiden aufweisen und die Verschließschutzschicht neben den ellipsoiden Feststoffpartikeln Hartstoffpartikel mit einer Härte nach Mohs von wenigstens ≥ 8, vorzugsweise wenigstens ≥ 9, aufweist, wobei die Länge der Hauptachse der ellipsoiden Feststoffpartikel im Mittel größer als der mittleren Korndurchmesser der Hartstoffpartikel ist und das Verhältnis der Länge der Hauptachse der ellipsoiden Feststoffpartikel zu wenigstens einer seiner Nebenachsen im Mittel wenigstens ≥ 1,2, vorzugsweise ≥ 1,3, besonders bevorzugt ≥ 1,5, insbesondere ≥ 2 ist.

2. Verschleißschutzschicht gemäß Anspruch 1, wobei die ellipsoiden Feststoffpartikel eine Härte nach Mohs von wenigstens ≥ 5, vorzugsweise ≥ 6 aufweisen.

3. Verschleißschutzschicht gemäß einem der vorhergehenden Ansprüche, wobei die Verschleißschutzschicht aus einer Polymermatrix besteht, in welcher zumindest die ellipsoiden Feststoffpartikel eingelagert sind.

4. Verschleißschutzschicht gemäß Anspruch 3, wobei die Polymermatrix aus einer wärme- und/oder strahlungshärtbaren Monomer- und/oder Oligomerzusammensetzung durch Wärmeeinwirkung und/oder Strahlungseinwirkung elektromagnetischer Strahlung geeigneter Wellenlänge gebildet ist.

5. Verschleißschutzschicht gemäß Anspruch 4, wobei die Hartstoffpartikel aus einem Material bestehen, welches ausgewählt ist aus der Gruppe bestehend Titannitrid, Titancarbid, Siliciumnitrid, Siliciumcarbid, Borcarbid, Wolframcarbid, Tantalcarbid, Aluminiumoxid (Korund), Zirconiumoxid und Zirconiumnitrid oder Mischungen dieser.

6. Verschleißschutzschicht gemäß einem der vorangehenden Ansprüche, wobei die Länge der Hauptachse der ellipsoiden Feststoffpartikel im Mittel zwischen ≥10µm und ≤ 375µm, vorzugsweise zwischen ≥10µm und ≤ 150µm liegt.

7. Verschleißschutzschicht gemäß einem der Ansprüche 1 bis 6, wobei das Verhältnis des Anteils von Feststoffpartikeln zu Hartstoffpartikeln in der Verschleißschutzschicht zwischen ≤ 10:1 und ≥ 0,1:10, vorzugsweise zwischen ≤ 5:1 und ≥ 0,5:10, besonders bevorzugt zwischen ≤ 1:1 und ≥ 1:10.

8. Verschleißschicht gemäß einem der vorhergehenden Ansprüche, wobei der Anteil an Feststoffpartikeln und Hartstoffpartikel zusammen in der Verschleißschutzschicht zwischen ≥ 5 Gew.-% und ≤ 40 Gew.-%, vorzugsweise ≥ 15 Gew.-% und ≤ 25 Gew.-% liegt.

9. Wand-, Decken- oder Bodenpaneel, aufweisend eine Verschleißschutzschicht gemäß einem der Ansprüche 1 bis 8.

10. Verfahren zur Herstellung eines Wand-, Decken- oder Bodenpaneel, aufweisend die Verfahrensschritte:
- Bereitstellen eines plattenförmigen Trägers;
- Aufbringen einer Dekorschicht auf den Träger;
- Aufbringen einer Verschleißschutzschicht auf die Dekorschicht,
wobei als zur Aufbringung der Verschleißschutzschicht eine ellipsoide Feststoffpartikel sowie Hartstoffpartikel aufweisende, wärme- und/oder strahlungshärtbare Monomer- und/oder Oligomerzusammensetzung aufgebracht wird, welche durch Wärmeeinwirkung und/oder Strahlungseinwirkung elektromagnetischer Strahlung geeigneter Wellenlänge zumindest teilweise ausgehärtet wird, wobei die ellipsoiden Feststoffpartikel die Form eines Rotationsellipsoiden oder eines Triaxialellipsoiden aufweisen und die Hartstoffpartikel eine Härte nach Mohs von wenigstens ≥ 8, vorzugsweise wenigstens ≥ 9, aufweisen, wobei die Länge der Hauptachse der ellipsoiden Feststoffpartikel im Mittel größer als der mittleren Korndurchmesser der Hartstoffpartikel ist, und wobei das Verhältnis der Länge der Hauptachse der ellipsoiden Feststoffpartikel zu wenigstens einer seiner Nebenachsen im Mittel wenigstens ≥ 1,2, vorzugsweise ≥ 1,3, besonders bevorzugt ≥ 1,5, insbesondere ≥ 2 ist.

11. Verfahren gemäß Anspruch 10, wobei im Zuge der zumindest teilweisen Aushärtung der Verschleißschutzschicht eine im Wesentlichen mit dem Dekor übereinstimmende Struktur in die Verschleißschutzschichtoberfläche eingebracht wird und/oder vor und/oder nach dem Aufbringen der Verschleißschicht zumindest in einen Randbereich des plattenförmigen Trägers eine Profilierung eingebracht wird.

## Claims

1. Wear protection layer for a wall, ceiling or floor panel, wherein the wear protection layer comprises ellipsoidal solid particles,
wherein the ellipsoidal solid particles have the form of a rotational ellipsoid or a triaxial ellipsoid and the wear protection layer in addition to the ellipsoidal solid particles comprises hard material particles having a Mohs' hardness of at least ≥ 8, preferably at least ≥ 9, wherein the length of the major axis of the ellipsoidal solid particles in the average is greater than the mean grain diameter of the hard material particles and the ratio between the length of the major axis of the ellipsoidal solid particles and at least one of its minor axes in the average is at least ≥ 1.2, preferably ≥ 1.3, particularly preferably ≥ 1.5 and in particular ≥ 2.

2. Wear protection layer according to claim 1, wherein the ellipsoidal solid particles have a Mohs' hardness of at least ≥ 5, preferably ≥ 6.

3. Wear protection layer according to any one of the preceding claims, wherein the wear protection layer consists of a polymer matrix in which at least the ellipsoidal solid particles are incorporated.

4. Wear protection layer according to claim 3, wherein the polymer matrix is formed of a heat- and/or radiation curable monomer and/or oligomer composition by the action of heat and/or radiation of electromagnetic radiation of a suitable wavelength.

5. Wear protection layer according claim 4, wherein the hard material particles consist of a material which is selected from the group consisting of titanium nitride, titanium carbide, silicon nitride, silicon carbide, boron carbide, tungsten carbide, tantalum carbide, alumina (corundum), zirconium oxide and zirconium nitride or mixtures thereof.

6. Wear protection layer according to any one of the preceding claims, wherein the length of the major axis of the ellipsoidal solid particles in the average is between ≥ 10 µm and ≤ 375 µm, preferably between ≥ 10 µm and ≤ 150 µm.

7. Wear protection layer according to any one of claims 1 to 6, wherein the ratio of the proportion of solid particles to hard material particles in the wear protection layer is between ≤ 10:1 and ≥ 0.1:10, preferably between ≤ 5:1 and ≥ 0.5:10, particularly preferably between ≤ 1:1 and ≥ 1:10.

8. Wear protection layer according to any one of the preceding claims, wherein the total proportion of solid particles and hard material particles in the wear protection layer is between ≥ 5 wt.-% and ≤ 40 wt.-%, preferably ≥ 15 wt.-% and ≤ 25 wt.-%.

9. Wall, ceiling or floor panel, comprising a wear protection layer according to any one of claims 1 to 8.

10. Method for producing a wall, ceiling or floor panel, comprising the steps of:
- providing a plate-shaped carrier;
- applying a decorative layer on the support;
- applying a wear protection layer onto the decorative layer,
wherein as a wear protection layer a heat and/or radiation curable monomer and/or oligomer composition containing ellipsoidal solid particles is applied, which is cured at least partially by exposure to heat and/or radiation of electromagnetic radiation of a suitable wavelength,
wherein the ellipsoidal solid particles have the form of a rotational ellipsoid or a triaxial ellipsoid and the hard material particles have a Mohs' hardness of at least ≥ 8, preferably at least ≥ 9, wherein the length of the major axis of the ellipsoidal solid particles in the average is greater than the mean grain diameter of the hard material particles, and wherein the ratio between the length of the major axis of the ellipsoidal solid particles and at least one of its minor axes in the average is at least ≥ 1.2, preferably ≥ 1.3, particularly preferably ≥ 1.5 and in particular ≥ 2.

11. Method according to claim 10, wherein in the course of the at least partial curing of the wear protection layer a structure substantially matching with the decoration is introduced into the surface of the wear protection layer and/or prior to and/or subsequently to the application of the wear protection layer a profile is introduced at least at an edge region of the plate-shaped carrier.

## Revendications

1. Couche de protection contre l'usure pour un panneau mural, de plafond ou de sol, où la couche de protection contre l'usure présente des particules de matière solide ellipsoïdes, où les particules de matière solide ellipsoïdes présentent la forme d'un ellipsoïde de rotation ou d'un ellipsoïde triaxial et la couche de protection contre l'usure présente, à côté des particules de matière solide ellipsoïdes, des particules de matière dure avec une dureté selon Mohs d'au moins ≥ 8, de préférence d'au moins ≥ 9, où la longueur de l'axe principal des particules de matière solide ellipsoïdes est en moyenne supérieure au diamètre de grain moyen des particules de matière dure et le rapport de la longueur de l'axe principal des particules de matière solide ellipsoïdes par rapport à au moins un des axes secondaires est en moyenne au moins ≥ 1,2, de préférence ≥ 1,3, de manière particulièrement préférée ≥ 1,5, notamment ≥ 2.

2. Couche de protection contre l'usure selon la revendication 1, où les particules de matière solide ellipsoïdes présentent une dureté selon Mohs d'au moins ≥ 5, de préférence ≥ 6.

3. Couche de protection contre l'usure selon l'une des revendications précédentes, où la couche de protection contre l'usure est constituée d'une matrice de polymère, dans laquelle les particules de matière solide ellipsoïdes sont incorporées.

4. Couche de protection contre l'usure selon la revendication 3, où la matrice de polymère est formée d'une composition de monomères et/ou d'oligomères pouvant être durcis par la chaleur et/ou par rayonnement par l'influence de la chaleur et/ou l'influence d'un rayonnement d'un faisceau électromagnétique de longueur d'onde appropriée.

5. Couche de protection contre l'usure selon la revendication 4, où les particules de matière dure sont constituées d'un matériau, lequel est choisi dans le groupe constitué de nitrure de titane, de carbure de titane, de nitrure de silicium, de carbure de silicium, de carbure de bore, de carbure de tungstène, de carbure de tantale, d'oxyde d'aluminium (corindon), d'oxyde de zirconium et de nitrure de zirconium ou de mélanges de ceux-ci.

6. Couche de protection contre l'usure selon l'une des revendications précédentes, où la longueur de l'axe principal des particules de matière solide ellipsoïdes se situe en moyenne entre ≥ 10 µm et ≤ 375 µm, de préférence entre ≥ 10 µm et ≤ 150 µm.

7. Couche de protection contre l'usure selon l'une des revendications 1 à 6, où le rapport de la teneur en particules de matière solide par rapport aux particules de matière dure dans la couche de protection contre l'usure est entre ≤ 10:1 et ≥ 0,1 : 10, de préférence entre ≤ 5 : 1 et ≥ 0,5 : 10, de manière particulièrement préférée entre ≤ 1 : 1 et ≥ 1 : 10.

8. Couche de protection contre l'usure selon l'une des revendications précédentes, où la teneur en particules de matière solide et particules de matière dure, ensemble dans la couche de protection contre l'usure, se situe entre ≥ 5 % en poids et ≤ 40 % en poids, de préférence ≥ 15 % en poids et ≤ 25 % en poids.

9. Panneau mural, de plafond ou de sol, présentant une couche de protection contre l'usure selon l'une des revendications 1 à 8.

10. Procédé de fabrication d'un panneau mural, de plafond ou de sol, présentant les étapes de procédé :
- mise à disposition d'un support en forme de plaque ;
- apport d'une couche de décor sur le support ;
- apport d'une couche de protection contre l'usure sur la couche de décor,
où, pour l'apport de la couche de protection contre l'usure, une composition de monomères et/ou d'oligomères pouvant être durcis à la chaleur et/ou par rayonnement présentant des particules de matière solide ellipsoïdes ainsi que des particules de matière dure est rapportée,
laquelle est au moins partiellement durcie par l'influence de la chaleur et/ou l'influence du rayonnement d'un faisceau électromagnétique de longueur-d'onde-appropriée, où les particules de matière solide ellipsoïdes présentent la forme d'une ellipsoïde de rotation ou d'une ellipsoïde triaxiale et les particules de matière dure présentent une dureté selon Mohs d'au moins ≥ 8, de préférence d'au moins ≥ 9, où la longueur de l'axe principal des particules de matière solide ellipsoïdes est en moyenne supérieure au diamètre de grain moyen des particules de matière dure, et où le rapport des longueurs des axes principaux des particules de matière solide ellipsoïdes par rapport à au moins un des axes secondaires est en moyenne au moins ≥ 1,2 de préférence ≥ 1,3, de manière particulièrement préférée ≥ 1,5, notamment ≥ 2.

11. Procédé selon la revendication 10, où, au cours du durcissement au moins partiel de la couche de protection contre l'usure, une structure essentiellement en accord avec le décor est rapportée dans la surface de la couche de protection contre l'usure et/ou avant et/ou après l'apport de la couche d'usure, un profilé est rapporté au moins dans une zone de bordure du support en forme de plaque.
